# EUROPEAN PATENT APPLICATION

(11) **EP 4 844 651 A1**
(43) Date of publication of application: **25.11.2026**
(21) Application number: 25177445.1
(22) Date of filing: 19.05.2025
(51) Int. Cl.: G06Q 10/08

(54) **BREATHING APPARATUS HANDLING**

(71) Applicant: Dräger Safety AG & Co. KGaA, 23560 Lübeck (DE)
(72) Inventor: WIESE, Maximilian, 23560 Lübeck (DE); HANN, David Grant, Blyth, NE24 4RG (GB)
(74) Representative: Haseltine Lake Kempner LLP

(57) **Abstract**

There is provided herein a method for handling registration of breathing apparatus deployed at an emergency response incident. The method comprises a wireless device deployed at the emergency response incident obtaining (202), from a server of a network, first information indicative of an association between one or more breathing apparatus users and one or more breathing apparatus. The wireless device obtains (204) a first message from a network node deployed at the emergency response incident. The wireless device determines (206), based on the first information and the identifier of the first breathing apparatus, an identity of the user of the first breathing apparatus. The wireless device registers (208) the first breathing apparatus as deployed at the incident. Registering comprises generating an output indicative that the user of the first breathing apparatus is deployed at the incident.

## Description

### Technical Field

The present disclosure relates to methods for handling registration of breathing apparatus deployed at an emergency response incident, and entities configured to operate in accordance with those methods.

### Background

Emergency services (e.g. fire services) are organisations that ensure public safety, security, and health by addressing and resolving different emergencies. As such, emergency services require every advantage possible when dealing with emergency response incidents. This is especially true as emergency services are required to respond to increasingly more complex incidents. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In such a scenario, the ECO monitors the incident by physically organising the board with the help of "tallies", which visibly show the name of the firefighter being deployed at the incident and the time at which said fire fighter entered the incident. Thus, the tallies can be physical elements which are added and removed from the board to allow the ECO to keep track of the personnel deployed at an incident. The addition of a physical tally to the board can act as an incident registration for the corresponding firefighter. In addition to the physical board, the ECO commonly utilises walkie-talkies to manually control the incident and receive updates on the condition of personnel.

In recent years, some emergency services have adopted telemetry techniques which provide for enhanced communication between the personnel deployed at an incident. Specifically, emergency services personnel can be provided with equipment which enables (e.g. wireless) communication with other personnel and provides for the sharing of information describing the status of a user (e.g. wearer) of said equipment, and of the equipment itself. As such, emergency services personnel can be provided with equipment that enables the transmission of vital information in real time to an ECO, which gives the ECO more time to make tactical, and potentially lifesaving decisions. Therefore, techniques utilising enhanced communication provide a significant advantage for the overall safety of individuals involved in the incident and provides greater reassurance for responders during a deployment.

However, there exist certain challenges associated with current techniques for handling incident information. In particular, although there have been advances in connectivity between individuals and entities operating at an incident, it is still a common requirement for an individual user such as an ECO, to manually setup an incident. For example, an ECO is commonly required to manually log information about the incident and the personnel present at the incident so that the incident can be managed safely. However, such a manual setup requires time which is not always available in an emergency situation. This delay in time can have serious consequences for the success of the incident, and potentially, for the safety and welfare of those involved in the incident. For example, time delay can lead to a delay in personnel (e.g. firefighters) entering an incident (e.g. building fire). In such a case, even a few seconds worth of delay can make the difference between mission success and failure. Furthermore, the time pressure associated with manually setting up a potentially dangerous incident can lead to unforced errors being made by an ECO. As a result, important data may be lost or entered incorrectly, which is detrimental to post-incident data analysis.

There are existing techniques which aim to alleviate the above-mentioned challenges associated with handling incident information. For example, some existing techniques utilise radio frequency identifier (RFID) cards which can be used by a wearer of a BA set to identify the wearer in a telemetry system. For example, while at an incident, the wearer of the BA can scan their unique RFID card using a scanner of the BA. The BA can then send identifier information to a telemetry system such that the association between the wearer and the BA can be quickly logged. However, such techniques require the presence of an RFID card at the initiation of an incident (e.g. upon arrival to a building fire and/or evacuation scenario). Undesirably, RFID cards can become easily lost or forgotten by the wearer of the BA and thus introduce delay into the setup of an incident. As mentioned above, such delays can have serious consequences for the success of the incident and for the safety and welfare of those involved in the incident.

### Summary

As mentioned above, there are certain challenges associated with existing techniques for handling incident information. Indeed, many existing techniques require a controller of an incident (e.g. an ECO) to manually configure incident information such as BA wearer (e.g. firefighter) identity information before the deployment of said BA wearers to the incident. Moreover, existing techniques which attempt to address the aforementioned challenges still exhibit issues associated with time delay. Such time delay can have severe consequences for the success and safety of an emergency response incident. It is therefore desirable to provide an improved technique in which time delays are minimised and chances of incident success are increased.

Therefore, according to a first aspect of the disclosure, there is provided a method for handling registration of breathing apparatus deployed at an emergency response incident. The method is a computer-implemented method. The method comprises a wireless device deployed at the emergency response incident obtaining, from a server of a network, first information indicative of an association between one or more breathing apparatus users and one or more breathing apparatus. The method also comprises the wireless device obtaining a first message from a network node deployed at the emergency response incident. The first message comprises an identifier of a first breathing apparatus. The method further comprises the wireless device determining, based on the first information and the identifier of the first breathing apparatus, an identity of the user of the first breathing apparatus. The method also comprises the wireless device registering the first breathing apparatus as deployed at the incident. Registering comprises generating an output indicative that the user of the first breathing apparatus and the first breathing apparatus is deployed at the incident.

According to a second aspect of the disclosure, there is provided a system configured to perform the method described herein. The system comprises at least one wireless device, as described herein.

According to a third aspect of the disclosure, there is provided a computer program product, embodied on a non-transitory machine-readable medium. The computer program product comprises instructions which are executable by processing circuitry to cause the processing circuitry to perform the method described herein.

Thus, in the manner described above, improved techniques for handling registration of breathing apparatus deployed at an emergency response incident are provided. Advantageously, the techniques described herein reduce time delay in registering a breathing apparatus as being deployed at an emergency response incident. As such, the techniques described herein enable a wireless device (e.g. of an incident monitoring system) to rapidly configure an incident session and deploy BA users (e.g. firefighters) to the emergency response incident. The reduction in time delay enables faster response time whilst maintaining safety for personnel involved in the incident. As such, the techniques described herein enable greater likelihood of success in emergency response incident scenarios. Moreover, in some of the techniques described herein, a breathing apparatus need only transmit a first message comprising an identifier of the breathing apparatus. In this way, the amount of information which the breathing apparatus needs to transmit is advantageously reduced, therefore reducing the likelihood of network traffic overload, and making bandwidth available for other communications.

### Brief description of the drawings

For a better understanding of the techniques, and to show how they may be put into effect, reference will now be made, by way of example, to the accompanying drawings, in which:
Figure 1 is a block diagram illustrating a wireless device according to an embodiment;
Figure 2 is a block diagram illustrating a method performed according to an embodiment; and
Figures 3 and 4 are block diagrams illustrating a system according to some embodiments.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

The techniques described herein involve breathing apparatus. A breathing apparatus as referred to herein can be configured to initiate transmission of information (e.g. signals) and/or receive information. For example, the BA referred to herein (e.g. the first BA) can be configured to initiate transmission of information towards the network node referred to herein. The BA referred to herein may be any type of BA. More specifically, the BA referred to herein may be any type of apparatus (e.g. device) which is worn by a wearer of the BA in order to provide a supply of breathable gas (e.g. air) to the wearer. As such, a BA can be advantageously utilised in an atmosphere that is immediately dangerous to life or health. In an example, the BA referred to herein may comprise a self-contained breathing apparatus (SCBA) and/or a compressed air breathing apparatus (CABA). The BA referred to herein may comprise a closed-circuit BA. Alternatively, the BA referred to herein may comprise an open-circuit BA. The BA referred to herein may comprise a lung demand regulator, a face mask, a compressed breathing gas tank, and/or a support frame. A BA may be worn by a firefighter. Thus, a wearer of a BA may be a firefighter. In some examples, the BA referred to herein may be a firefighter BA.

The techniques described herein involve a wireless device. A wireless device, as described herein, may be any type of wireless device. More specifically, a wireless device as referred to herein may be any device configured to communicate wirelessly with one or more other entities (e.g. of the network referred to herein). For example, the wireless device may be a user equipment (UE). The wireless device referred to herein can be of a network. For example, the wireless device can be connected to a network (e.g. that the network node referred to herein is connected to). The wireless device referred to herein can include, but is not limited to, a smart device such as a smartphone or a tablet. The wireless device can be configured to run an application (or "app") which, for example, enables the wireless device to communicate with one or more other entities of the network. The application may provide a user of the wireless device (e.g. an ECO) with the ability to manage and/or control an incident as described herein. The wireless device may be configured to enable the user to create, edit and/or view incident information. For example, the wireless device may be configured to enable the user of the wireless device to view a BA (e.g. deployed at the incident). Alternatively, or in addition, the wireless device may be configured to enable the user of the wireless device to (re)configure the BA and/or the respective one or more wearers of the BA into groups (e.g. teams). The reconfiguration can comprise, for example, assigning and/or removing a BA, and/or a wearer of the BA, to and/or from a group respectively. As such, the incident can be controlled and managed (e.g. centrally) using the wireless device.

The techniques described herein involve a network node. The network node referred to herein can be configured to operate as a transceiver between the wireless device referred to herein and a breathing apparatus (BA) (e.g. the first BA referred to herein). In some examples, the network node can route communications between a BA (e.g. the first BA referred to herein) and the wireless device, and vice versa. Thus, in some examples, the network node referred to herein may be configured to operate as a repeater device between different entities referred to herein. The network node referred to herein can be configured to receive communications from the wireless device referred to herein, and/or one or more BAs (e.g. the first BA referred to herein). The network node referred to herein can be configured to initiate transmission of information towards the wireless device, and/or one or more BA. Herein, the term "initiate" can mean, for example, cause or establish. Thus, any reference to an entity (e.g. the network node) "initiating transmission" will be understood to mean that the entity (e.g. the processing circuitry of the entity) can be configured to itself transmit (e.g. via a communications interface of the entity) or can be configured to cause another entity to transmit. The network node can be referred to herein as a "hub" and/or a "base station (BS)". The network node referred to herein may comprise at least one battery. For example, the network node referred to herein may be battery powered (e.g. by the at least one battery). The at least one battery may be at least one rechargeable battery. The at least one battery may comprise two (e.g. separate) batteries. As such, in some examples, the network node can be powered (e.g. in an alternating manner) by two separate batteries. The network node referred to herein may be a portable network node. For example, the network node may comprise one or more (e.g. fixed) handles. The one or more handles can be used to carry and/or lift the network node. In this way, the network node may be easily deployed at, and/or removed from, an emergency response incident.

The techniques described herein involve a server of a network. The server can be a computing device and/or system configured to provide first information, as defined herein. In some examples, the server can be configured to manage, process, and/or respond to one or more requests for (e.g. first) information. The server may receive a request from a network device (e.g. the wireless device referred to herein). The server can include one or more of a processor, a memory, and a network interface. The server can be configured to execute software applications or services that perform specific functions such as data storage, authentication, and/or content delivery. The server may be implemented as a standalone physical machine, or as a virtual machine (e.g. within a data center). In some examples, the server may be part of a distributed server architecture. In some examples, the server referred to herein can be a cloud server. The cloud server may be a virtualized computing resource (e.g. that operates within a distributed networked environment).

The server referred to herein may be configured to store information obtained from one or more different entities (e.g. the communication device referred to herein). For example, the server referred to herein can be configured to store information indicative of an association between one or more BA and one or more corresponding BA wearers. The server may be configured to operate as a repository such that other devices (e.g. the wireless device referred to herein) can obtain information from the server. In some examples, the server may correspond to a database. For example, the server may store the database. In some examples, the server may be a server associated with an emergency service (e.g. a fire service). In some examples, the server may store information indicative of an identity of firefighters in a fire service. In some examples, the server can be configured to store information associated with one or more BAs and/or one or more wearers of the one or more BAs. For example, the server may be configured to store information associated with a plurality of fire stations, one or more firefighters corresponding to the plurality of fire stations, and/or one or more BAs corresponding to the one or more firefighters.

The techniques described herein can be used in respect of any network, such as any communications or telecommunications network, e.g. cellular network. The network referred to herein may be a radio network. For example, the network referred to herein may be a 2.4GHz radio network. In some examples, the network may comprise a Wi-Fi network (e.g. based on the Institute of Electrical and Electronics Engineers (IEEE) 802.11 family of standards). Alternatively, or in addition, the network may comprise a Bluetooth network (e.g. based on the IEEE 802.15.1 family of standards).

As described herein, the wireless device referred to herein is deployed at an emergency response incident. Herein an emergency response incident may be any type of emergency response incident. More specifically, an emergency response incident may be any incident which involves the addressing and/or resolving of an emergency. An emergency, as referred to herein, can be an urgent, unexpected and/or dangerous situation that poses an immediate risk to health, life, property and/or environment. An emergency may require urgent intervention to prevent a worsening of the situation. Examples of the emergency response incident referred to herein include, but are not limited to, incidents which pose a danger to life, a danger to health, and/or a danger to the environment. For example, the emergency response incident referred to herein may include a fire related incident (e.g. a building fire, a forest fire, a car fire, etc.). Alternatively, or in addition, the emergency response incident referred to herein may involve hazardous material operations (e.g. dealing with substances which are a risk to health, safety, property, and/or the environment).

Some of the techniques described herein can involve establishment of an incident session. An incident session, as referred to herein, can refer to an information exchange between two or more communicating entities (e.g. a message exchange). The information exchanged can comprise incident information. For example, the information exchanged during the incident session can be information associated with the emergency response incident referred to herein. An incident session can be established (e.g. set up) at a certain point in time (e.g. using a session establishment protocol). An incident session can be terminated at a later point in time. The incident session referred to herein may be identified by an incident session identifier. An incident session identifier can be a piece of data that can be used (e.g. in communications with another entity) to identify an incident session. An incident session identifier may be a unique identifier and/or a uniquely derived identifier. Herein, the incident session defined can involve one or more of the network node referred to herein, the wireless device referred to herein, and the first BA referred to herein. The incident session can be for handling (e.g. communicating, storing, analysing, etc.) incident information (e.g. commands, alerts, status updates, etc.) associated with the emergency response incident referred to herein.

The techniques described herein involve registration of BA. Registration of a BA may comprise the determination (e.g. identification) of the BA as being deployed at an emergency response incident. In some examples, registration of the BA can involve the assignment of the BA to a specific incident (e.g. of a plurality of incidents). In some examples, a BA may need to be registered before a user of the BA can operate at an incident (e.g. for compliance with safety regulations). Registration of a BA can comprise a (e.g. initial) determination, by the wireless device, that the BA is present at the emergency response incident. Registration of a BA may be specific to a particular emergency response incident. For example, a BA may need to be registered at each incident before the user of the BA can (e.g. safely) engage with the incident.

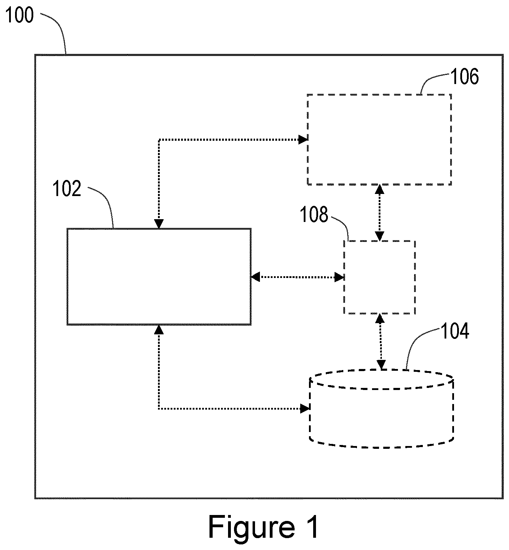

**Figure 1** illustrates a wireless device 100 according to an embodiment. The wireless device 100 can be for handling registration of breathing apparatus deployed at an emergency response incident.

As illustrated in Figure 1, the wireless device 100 comprises processing circuitry (or logic) 102. The processing circuitry 102 controls the operation of the wireless device 100 and can implement the method described herein in respect of the wireless device 100. The processing circuitry 102 can be configured or programmed to control the wireless device 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the wireless device 100. In particular implementations, each of the one or more hardware components can be configured to perform, or is for performing, individual or multiple steps of the method described herein in respect of the wireless device 100. The processing circuitry 102 can be configured to run software to perform the method described herein in respect of the wireless device 100. The processing circuitry 102 can thus be implemented in numerous ways, with software and/or hardware, to perform the various functions described herein in respect of the wireless device 100.

Briefly, the processing circuitry 102 of the wireless device 100 is configured to obtain, from a server of a network, first information indicative of an association between one or more breathing apparatus users and one or more breathing apparatus. The processing circuitry 102 of the wireless device 100 is further configured to obtain a first message from a network node deployed at the emergency response incident. The first message comprises an identifier of a first breathing apparatus. The processing circuitry 102 of the wireless device 100 is also configured to determine, based on the first information and the identifier of the first breathing apparatus, an identity of the user of the first breathing apparatus. The processing circuitry 102 of the wireless device 100 is further configured to register the first breathing apparatus as deployed at the incident. Registering comprises generating an output indicative that the user of the first breathing apparatus is deployed at the incident.

As illustrated in Figure 1, the wireless device 100 may optionally comprise a memory 104. Alternatively, the memory 104 may be external to (e.g. separate to or remote from) the wireless device 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the wireless device 100 to operate in the manner described herein. For example, the memory 104 may be configured to store program code or instructions that can be executed by the processing circuitry 102 to cause the wireless device 100 to operate in accordance with the method described herein in respect of the wireless device 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Figure 1, the wireless device 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the wireless device 100. Thus, the user interface 106 may be a user interface that enables the rendering (or outputting, displaying, or providing) of information and/or that enables a user to provide a user input. For example, the user interface 106 may be configured to display incident information indicative of an evacuation order for personnel deployed at the incident.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Figure 1, the wireless device 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the wireless device 100, or components of the wireless device 100 (e.g. the processing circuitry 102, the memory 104, the user interface 106, and/or any other components of the wireless device 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g. the first BA, the network node, the server, the communication device, and/or any other entity) referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the wireless device 100, or components of the wireless device 100, to communicate and/or connect in any suitable way. For example, the communications interface 108 may enable the wireless device 100, or components of the wireless device 100, to communicate and/or connect wirelessly, via a wired connection, or via any other communication (or data transfer) mechanism. In some wireless implementations, for example, the communications interface 108 may enable the wireless device 100, or components of the wireless device 100, to use radio frequency (RF), Wi-Fi, Bluetooth, or any other wireless communication technology to communicate and/or connect. In some examples, the communications interface 108 may comprise a proprietary radio module.

Although the wireless device 100 is illustrated in Figure 1 as comprising a single memory 104, it will be appreciated that the wireless device 100 may comprise at least one memory (i.e. a single memory or a plurality of memories) 104 that operate in the manner described herein. Similarly, although the wireless device 100 is illustrated in Figure 1 as comprising a single user interface 106, it will be appreciated that the wireless device 100 may comprise at least one user interface (i.e. a single user interface or a plurality of user interfaces) 106 that operate in the manner described herein. Similarly, although the wireless device 100 is illustrated in Figure 1 as comprising a single communications interface 108, it will be appreciated that the wireless device 100 may comprise at least one communications interface (i.e. a single communications interface or a plurality of communications interfaces) 108 that operate in the manner described herein. It will also be appreciated that Figure 1 only shows the components required to illustrate an embodiment of the wireless device 100 and, in practical implementations, the wireless device 100 may comprise additional or alternative components to those shown.

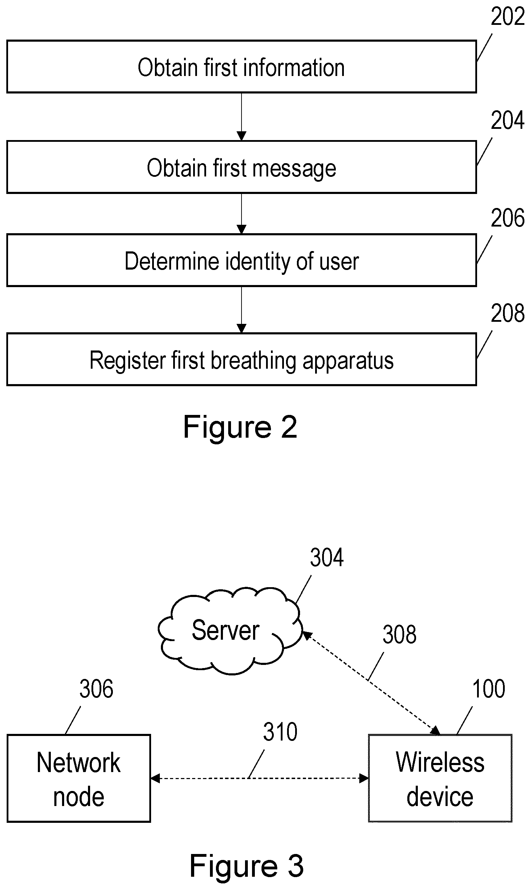

**Figure 2** illustrates a method according to an embodiment. The method is for handling registration of breathing apparatus deployed at an emergency response incident. The method can be performed by a system, as described herein. For example, the wireless device 100 described earlier with reference to Figure 1 can be configured to perform at least some of the method as described with reference to Figure 2. For example, at least some of the method can be performed by or under the control of the processing circuitry 102 of the wireless device 100. As described herein, the wireless device 100 is deployed at the emergency response incident.

With reference to Figure 2, at block 202, the wireless device 100 obtains, from a server of a network, first information indicative of an association between one or more breathing apparatus users and one or more breathing apparatus. The first information may be indicative of a correspondence between each breathing apparatus user and a breathing apparatus of the one or more breathing apparatus. In some examples, the first information can comprise, for each user of the one or more breathing apparatus users, information indicative of a name of the user. For example, the information indicative of the name of the user may comprise an (e.g. unique) identifier of the user. The identifier of the user may be a numerical identifier and/or an alphanumerical identifier (e.g. a string). For example, in some scenarios, the information indicative of the name of the user may be indicative of a unique string identifier associated with the user. In some examples, the one or more breathing apparatus referred to herein can comprise a plurality of breathing apparatus. In these examples, the first information can be indicative of an association between each breathing apparatus user of the plurality of breathing apparatus users and a (e.g. corresponding) breathing apparatus of the plurality of breathing apparatus. A user of a breathing apparatus may correspond to a wearer of the breathing apparatus. For example, a user of a breathing apparatus, as referred to herein, may be understood to correspond to a person and/or individual that (e.g. physically) wears the breathing apparatus.

In some examples, the first information referred to herein can comprise, for each user of the one or more breathing apparatus users, an identifier of a group, of a plurality of groups, that the user is associated with. For example, the first information referred to herein can comprise information indicative of the first group. The first group can be a group of a plurality of groups to which the one or more breathing apparatus and/or the one or more users of the one or more breathing apparatus are associated. The information indicative of the first group may be an identifier (ID) of the first group.

In some examples, the wireless device 100 may obtain the first information in response to activation of the wireless device 100. For example, the wireless device 100 may obtain the first information (e.g. immediately) in response to an activation procedure of the wireless device 100. The activation procedure of the wireless device 100 may comprise the wireless device 100 being switched on, and/or a start-up operation of the wireless device 100 being completed. Alternatively, or in addition, the wireless device 100 may obtain the first information in response to obtaining, at the wireless device 100, a request to initiate an incident session associated with the emergency response incident. For example, the wireless device 100 may receive the request to initiate the incident session from the network node referred to herein. The request to initiate the incident session may act as a trigger for the wireless device 100 to obtain the first information.

In some examples, the wireless device 100 obtaining the first information may comprise the wireless device 100 initiating transmission of a first request for the first information to the server. Thus, the server may receive the first request from the wireless device 100. In some examples, the one or more breathing apparatus can be associated with a first group of breathing apparatus of a plurality of groups of breathing apparatus. In some examples, the first request referred to herein can comprise an ID associated with the emergency response incident, and/or an ID associated with the (e.g. specific) first group. The first group may be, for example, a functional unit of an emergency services. For example, the first group can be a functional unit within a fire service that the one or more breathing apparatus, and/or the one or more users of the one or more breathing apparatus, belong to. In this way, the wireless device 100 can request first information related to specific groups of breathing apparatus and/or users (e.g. a particular fire service subunit, fire station, etc.). In some examples, the first group may be a fire service group associated with the wireless device 100. In this way, the wireless device 100 can obtain first information relevant to the associated system (e.g. emergency response system) of the wireless device 100.

In some examples, the server can initiate transmission of a first response to the first request towards the wireless device 100. Thus, the wireless device 100 can receive the first response from the server. The first response can comprise the first information as defined herein. Therefore, in some examples, obtaining the first information from the server may comprise the wireless device 100 receiving the first information (e.g. in a message) from the server.

As illustrated at block 204 of Figure 2, the wireless device 100 obtains a first message from a network node deployed at the emergency response incident. The first message comprises an identifier of a first breathing apparatus. The identifier of the first breathing apparatus may be a numerical identifier and/or an alphanumerical identifier (e.g. a string). In some examples, obtaining the first message can comprise the wireless device 100 receiving the first message from the network node. In some examples, the first message may comprise (e.g. information indicative of) the identifier of the first breathing apparatus only. For example, the first message may comprise no other information other than the identifier of the first breathing apparatus. In this way, communication bandwidth between the first breathing apparatus, the network node, and the wireless device 100 can be conserved. In some examples, the first message can comprise a request for the first breathing apparatus to be registered at the wireless device 100.

As illustrated at block 206 of Figure 2, the wireless device 100 determines, based on the first information and the identifier of the first breathing apparatus, an identity of the user of the first breathing apparatus. For example, the wireless device 100 may compare the first information and the identifier of the first breathing apparatus to determine (e.g. identify) the identity of the user of the first breathing apparatus. As such, the wireless device 100 can correlate the identity of the first breathing apparatus and the identity of the user (e.g. wearer) of the first breathing apparatus without receiving information indicative of the identity of the user from the network node and/or the first breathing apparatus. In this way, the wireless device 100 is able to determine the identity of the user of the first breathing apparatus while conserving communication bandwidth between the first breathing apparatus, the network node, and the wireless device 100.

As illustrated at block 208 of Figure 2, the wireless device 100 registers the first breathing apparatus as deployed at the incident. Registering the first breathing apparatus as deployed at the incident comprises generating an output indicative that the user of the first breathing apparatus is deployed at the incident. Registering the first breathing apparatus as deployed at the incident may comprise determining that a status of the first breathing apparatus is deployed (e.g. based on the first message). For example, registering the first breathing apparatus as deployed at the incident can comprise (re)configuring the status of the first breathing apparatus to deployed (e.g. active). (Re)configuring the status of the first breathing apparatus may include altering the status of the first breathing apparatus from a standby (e.g. inactive) status to a deployed (e.g. active). Registration of the first breathing apparatus can indicate that the first breathing apparatus (e.g. and the user of the first breathing apparatus) is actively involved in the emergency response incident. As such, registration of the first breathing apparatus can involve tracking an (e.g. incident engagement) activity of the first breathing apparatus and/or the user of the first breathing apparatus. Such a registration procedure can be helpful for ensuring proper handling of an incident and enhances the safety of those involved in the incident.

As mentioned herein, registering the first breathing apparatus as deployed at the incident comprises generating an output indicative that the user of the first breathing apparatus is deployed at the incident. The output referred to herein may comprise one or more of a visual output, an audio output, and a haptic output. For example, generating the output may comprise generating a visual output indicative that the user of the first breathing apparatus is deployed at the incident. The visual output may comprise information indicative of an identifier (e.g. a name) of the user of the first breathing apparatus. Generating the visual output may comprise generating the visual output on a display (e.g. touch screen) of the wireless device 100. In some examples, generating the visual output may comprise adding a user block associated with the user of the first breathing apparatus to a first window of a display (e.g. screen) of the wireless device 100. The first window can be associated with one or more breathing apparatus users that are deployed at the incident.

In some examples, registering the first breathing apparatus may comprise registering the first breathing apparatus as deployed at the incident if the first breathing apparatus is not already registered as deployed at the incident. For example, the performance of the step of registering the first breathing apparatus may only be performed (e.g. by the wireless device 100) if the first breathing apparatus is not already registered as deployed at the incident. In some examples, the step of registering the first breathing apparatus may only be performed if the first message referred to herein is an initial message from the network node and/or the first breathing apparatus. For example, the first message may be the first communication received by the wireless device 100 that is associated with the first breathing apparatus.

In some examples, the first breathing apparatus, as referred to herein, may initiate transmission of the first message, as defined herein, towards the network node. Transmission of the first message may be initiated by the first breathing apparatus in response to activation of the first breathing apparatus. For example, the first breathing apparatus may initiate transmission of the first message (e.g. immediately) in response to an activation procedure of the first breathing apparatus. The activation procedure of the first breathing apparatus may comprise the first breathing apparatus being switched on, and/or a start-up operation of the first breathing apparatus being completed.

Although not illustrated in Figure 2, in some examples, the method may comprise the network node receiving the first message from the first breathing apparatus and initiating transmission of the first message towards the wireless device 100. Thus, the first message may be transmitted by the first breathing apparatus towards the wireless device 100 via the network node. For example, the network node can be a portable device configured to operate as a communication proxy between the first breathing apparatus and the wireless device 100. In some examples, the network node receiving the first message can comprise receiving telemetry data comprising the first message from the first breathing apparatus. In practical scenarios, the available (e.g. telemetry) communication bandwidth between the first breathing apparatus and the network node may be relatively small. In such scenarios, it is advantageous to only include the identifier of the first breathing apparatus (i.e. and not the identifier of the user of the first breathing apparatus) in the first message. That is, in some scenarios, the bandwidth between breathing apparatus and the network node may not be large enough to handle both user ID information and breathing apparatus ID information.

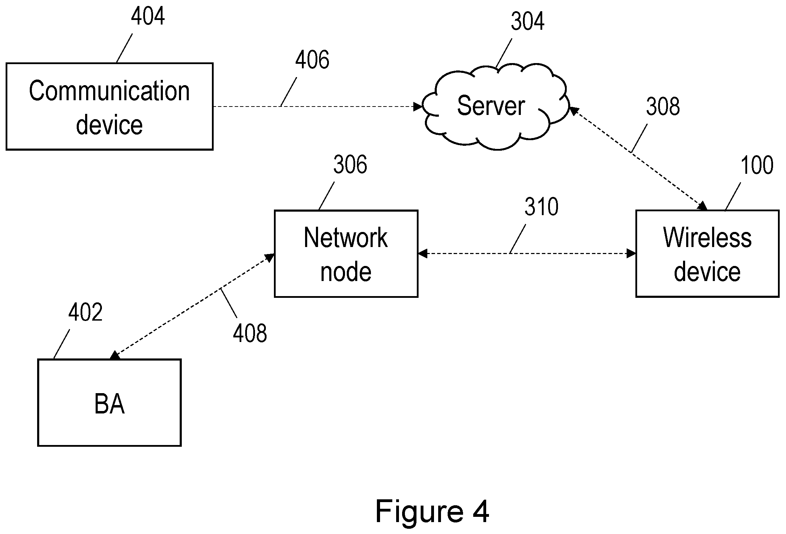

Although also not illustrated in Figure 2, in some examples, the method may comprise a communication device (e.g. as described with reference to Figure 4) obtaining an input indicative of an association between the first breathing apparatus and the identity of the user of the first breathing apparatus. In some examples, the communication device may initiate transmission of information indicative of the association between the first breathing apparatus and the identity of the user of the first breathing apparatus towards the server, as referred to herein. The communication device can correspond to a variety of end devices. For example, the communication device can be a (e.g. body-worn) smart device. In some examples, the communication device referred to herein can be one or more of a computer, a tablet, a smart phone, and a smart watch.

The input indicative of the association between the first breathing apparatus and the identity of the user of the first breathing apparatus may be a user input. The user of the first breathing apparatus can be the same as the user of the communication device. For example, the user can utilise the communication device to input their association with the first breathing apparatus. In some examples, the input indicative of the association may be obtained (e.g. by the communication device) prior to the initiation of the emergency response incident referred to herein. For example, the user can input their breathing apparatus association before initiation of the incident. In some examples, the user can input their breathing apparatus association for the breathing apparatus that they will wear during their shift. In this way, the user (e.g. a firefighter) is able to personally allocate the breathing apparatus (e.g. set) they are going to use (e.g. that day). In some examples, the user may access a (e.g. web) application in order to provide the input. As such, in some examples, the communication device may be configured to run the (e.g. web) application. The application can be linked to an (e.g. personal) account associated with the user. For example, the user may log on to the application via the communication device (e.g. personal smart phone and/or personal smart watch). In some examples, the user may utilise a virtual tally card (e.g. in a smart wallet) to input the association between the first breathing apparatus and the (e.g. identity of the) user. By utilising the communication device in the manner described above, the need for physical ID cards (e.g. RFID cards) to be carried by the user is removed. This is advantageous as physical ID cards can be easily lost, forgotten, or damaged.

Although not illustrated in Figure 2, in some examples, the method may comprise the wireless device 100 generating an incident session associated with the emergency response incident. For example, the wireless device 100 may generate a virtual incident session (e.g. via the processing circuitry 102 of the wireless device 100 100) to monitor the emergency response incident. The incident session may be configured to monitor and/or track personnel and/or breathing apparatus users involved in the incident.

Thus, in the manner described above, a user of a breathing apparatus can allocate themselves (e.g. via a communication device) such that when the user arrives at an incident (e.g. and turns on their breathing apparatus), the breathing apparatus will be automatically registered at the wireless device 100 (e.g. via the network node). In this way, the user's name may be automatically displayed to an ECO of the incident via the wireless device 100.

**Figure 3** is a block diagram illustrating a system according to an embodiment. The system can be for handling registration of breathing apparatus deployed at an emergency response incident. As illustrated in Figure 3, the system comprises a wireless device 100, as referred to herein. As also illustrated in Figure 3, the system can comprise a server 304 of a network, as referred to herein, and a network node 306, as referred to herein. Although not explicitly illustrated in Figure 3, the wireless device 100 and the network node 306 are deployed at the emergency response incident. The server 304 can be a remote server, such as a cloud server. For example, the (e.g. hardware associated with the) server 304 may not be deployed at the emergency response incident.

As illustrated by arrow 308 of Figure 3, the wireless device 100 and the server 304 can communicate. For example, the wireless device 100 and the server 304 may communicate via a (e.g. long term evolution (LTE)) mobile network. Communications between the wireless device 100 and the server 304 can comprise the first information referred to herein. For example, the wireless device 100 can receive the first information from the server 304, as described herein. The server 304 may correspond to a central database for the system illustrated in Figure 3.

As illustrated by arrow 310 of Figure 3, the wireless device 100 and the network node 306 can communicate. For example, the wireless device 100 and the network node 306 may communicate via a WiFi network. Communications between the wireless device 100 and the network node 306 can comprise the first message referred to herein. For example, the wireless device 100 can receive the first message from the server 304, as described herein. In some examples, communications between the wireless device 100 and the network node 306 can include any information that the network node 306 receives from the first breathing apparatus (e.g. and/or any breathing apparatus connected to the network node 306).

**Figure 4** is a block diagram illustrating a system according to an embodiment. The system illustrated in Figure 4 illustrates an example way in which the system as described with reference to Figure 3 can be implemented and supplemented in order to achieve the above mentioned, and further, functionality. With reference to the system of Figure 4, the wireless device 100, the server 304, and the network node 306 can be as described with reference to Figure 3. As illustrated in Figure 4, the system can comprise a first breathing apparatus 402 ("BA"), as referred to herein, and a communication device 404, as referred to herein. As described herein, the first breathing apparatus 402 can be deployed at the emergency response incident. For example, the first breathing apparatus 402 can arrive at the incident in order to be deployed. The incident may be, for example, a building fire, and the first breathing apparatus may be a firefighting breathing apparatus. The communication device 404 may be a portable device. In some examples, the communication device may be deployed at the emergency response incident (e.g. in examples in which the communication device 404 is a body-worn device). Alternatively, the communication device 404 may not be deployed at the incident. For example, the communication device 404 may be a remote device, such as a terminal computer.

As illustrated by arrow 406 of Figure 4, the communication device 404 and the server 304 can communicate. For example, the communication device 404 and the server 304 may communicate via a mobile network. Communications between the communication device 404 and the server 304 can comprise the first information referred to herein. For example, the server 304 can receive the first information from the communication device 404, as described herein.

As illustrated by arrow 408 of Figure 4, the first breathing apparatus 402 and the network node 306 can communicate. For example, the first breathing apparatus 402 and the network node 306 may communicate via telemetry (e.g. radio). As illustrated in Figure 4, the network node 306 can be configured to operate as a communication proxy between the first breathing apparatus 402 and the wireless device 100. In some examples, the network node 306 can operate as a communication proxy for a plurality of breathing apparatus (e.g. comprising the first breathing apparatus). Communications between the first breathing apparatus 402 and the network node 306 can comprise the first message referred to herein. For example, the network node 306 can receive the first message from the first breathing apparatus 402, as described herein.

In some examples, the wireless device 100 may store (e.g. backup) information associated with the incident. For example, the wireless device 100 may store (e.g. any) information received from the network node 306 about the first breathing apparatus 402. Storing this information may comprise initiating transmission of the information towards the (e.g. cloud) server 304. In this way, the information can be backed-up at a remote location.

There is also provided a computer program embodied on a non-transitory machine-readable medium. The non-transitory machine-readable medium comprises instructions. The instructions are executable such that, on execution by a suitable computer or processor, the computer or processor is caused to perform the method described herein. The non-transitory machine-readable medium may be, for example, any entity or device capable of carrying the computer program product. For example, the non-transitory machine-readable medium may include a data storage, such as a ROM (such as a CD-ROM or a semiconductor ROM) or a magnetic recording medium (such as a hard disk). Furthermore, the non-transitory machine-readable medium may be a transmissible carrier, such as an electric or optical signal, which may be conveyed via electric or optical cable or by radio or other means. When the computer program product is embodied in such a signal, the non-transitory machine-readable medium may be constituted by such a cable or other device or means. Alternatively, the non-transitory machine-readable medium may be an integrated circuit in which the computer program product is embedded, the integrated circuit being adapted to perform, or used in the performance of, the method described herein.

The techniques described herein enable effective handling of breathing apparatus deployed at an emergency response incident. Indeed, the techniques described herein allow for rapid deployment (e.g. by an ECO) of breathing apparatus users (e.g. firefighters) to an incident scene by reducing the need to manually update breathing apparatus user information (e.g. firefighter IDs). The techniques can be realised via a connected system of entities which frees users to only concentrate on the incident instead of wasting time writing down breathing apparatus user (e.g. firefighter) names at the beginning of an incident. The avoidance of time delay in an emergency response incident scenario results in an increased likelihood of incident success and personnel safety. Moreover, the techniques described herein remove the need for ID cards (e.g. RFID cards) which can be easily lost, forgotten, or damaged in an emergency incident scenario. The techniques described herein can enable the handling of thousands of breathing apparatus users (e.g. firefighters) at one time. In some of the techniques described herein, breathing apparatus users can allocate their own names to their breathing apparatus kit, thus improving system accountability.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A computer-implemented method for handling registration of breathing apparatus deployed at an emergency response incident, the method comprising:
a wireless device (100) deployed at the emergency response incident:
obtaining (202), from a server (304) of a network, first information indicative of an association between one or more breathing apparatus users and one or more breathing apparatus;
obtaining (204) a first message from a network node (306) deployed at the emergency response incident, wherein the first message comprises an identifier of a first breathing apparatus (402);
determining (206), based on the first information and the identifier of the first breathing apparatus (402), an identity of the user of the first breathing apparatus (402); and
registering (208) the first breathing apparatus (402) as deployed at the incident, wherein registering comprises generating an output indicative that the user of the first breathing apparatus (402) is deployed at the incident.

2. The method as claimed in claim 1, wherein registering the first breathing apparatus (402) comprises:
registering the first breathing apparatus (402) as deployed at the incident if the first breathing apparatus (402) is not already registered as deployed at the incident.

3. The method as claimed in any of the preceding claims, the method comprising:
initiating transmission, by the first breathing apparatus (402), of the first message towards the network node (306) in response to activation of the first breathing apparatus (402).

4. The method as claimed in any of the preceding claims, the method comprising:
a communication device (404):
obtaining an input indicative of an association between the first breathing apparatus (402) and the identity of the user of the first breathing apparatus (402); and
initiating transmission of information indicative of the association between the first breathing apparatus (402) and the identity of the user of the first breathing apparatus (402) towards the server (304).

5. The method as claimed in claim 4, wherein the communication device (404) is one or more of:
a computer;
a tablet;
a smart phone; and
a smart watch.

6. The method as claimed in any of the preceding claims, wherein the first information comprises:
for each user of the one or more breathing apparatus users:
information indicative of a name of the user;
a unique string identifier associated with the user; and/or
an identifier of a group, of a plurality of groups, that the user is associated with.

7. The method as claimed in any of the preceding claims, the method comprising:
the wireless device (100):
generating an incident session associated with the emergency response incident.

8. The method as claimed in any of the preceding claims, the method comprising:
the wireless device (100) obtaining (202) the first information in response to:
activation of the wireless device (100); and/or
obtaining, at the wireless device (100), a request to initiate an incident session associated with the emergency response incident.

9. The method as claimed in any of the preceding claims, wherein the one or more breathing apparatus are associated with a first group of breathing apparatus of a plurality of groups of breathing apparatus.

10. The method as claimed in any of the preceding claims, the method comprising:
the network node (306):
receiving the first message from the first breathing apparatus (402); and
initiating transmission of the first message towards the wireless device (100).

11. The method as claimed in claim 10, wherein receiving the first message comprises receiving telemetry data comprising the first message from the first breathing apparatus (402).

12. The method as claimed in any of the preceding claims, wherein generating the output comprises:
generating a visual output on a screen of the wireless device (100).

13. The method as claimed in any of the preceding claims, wherein:
the network node (306) is a portable device configured to operate as a communication proxy between the first breathing apparatus (402) and the wireless device (100); and/or
the server (304) is a cloud server.

14. A system configured to perform the method claimed in any of claims 1 to 13, wherein the system comprises:
a wireless device (100).

15. A computer program product, embodied on a non-transitory machine-readable medium, comprising instructions which are executable by processing circuitry to cause the processing circuitry to perform the method according to any of claims 1 to 13.
